Europäisches Patentamt

European Patent Office

Office européen des brevets

(19)

(11)  EP 0 537 064 B1

(12)  **FASCICULE DE BREVET EUROPEEN**

(45) Date de publication et mention
de la délivrance du brevet:
**22.05.1996  Bulletin 1996/21**

(51) Int. Cl.$^6$: **C01B 33/20**,  C01B 33/44,
C01B 33/22,  B01J 29/03

(21) Numéro de dépôt: **92402729.5**

(22) Date de dépôt: **01.10.1992**

(54) **Phyllosilicates 2:1 trioctaédriques et leur procédé de préparation**

Achtflächige 2:1 Phyllosilikate und ihre Herstellung

Trioctahedral 2:1 phyllosilicates and preparation thereof

(84) Etats contractants désignés:
**BE DE GB IT NL**

(30) Priorité:  **09.10.1991 FR 9112511**

(43) Date de publication de la demande:
**14.04.1993  Bulletin 1993/15**

(73) Titulaire: **INSTITUT FRANCAIS DU PETROLE**
**F-92502 Rueil-Malmaison (FR)**

(72) Inventeurs:
• **Joly, Jean-Francois**
**F-75003 Paris (FR)**

• **Huve, Laurent**
**F-68200 Mulhouse (FR)**
• **Martin, Pascal**
**F-68850 Staffelfelden (FR)**
• **Ledred, Ronan**
**F-68400 Riedisheim (FR)**
• **Saehr, Daniel**
**F-68400 Riedisheim (FR)**
• **Baron, Jacques**
**F-68100 Mulhouse (FR)**

(56) Documents cités:
**EP-A- 0 398 429**     **FR-A- 2 349 541**
**US-A- 3 586 478**     **US-A- 3 855 147**

Printed by Rank Xerox (UK) Business Services
2.11.7/3.4

## Description

Les phyllosilicates 2:1 trioctaédriques sont des minéraux qui résultent de l'empilement de feuillets élémentaires. Chaque feuillet comprend deux couches tétraédriques situées de part et d'autre d'une couche octaédrique. La couche tétraédrique est constituée de tétraèdres $\Delta O_4$, 3 sommets sur 4 étant communs à 2 tétraèdres et un sommet étant libre, $\Delta O_{(3/2+1)}$, $\Delta$ représentant une cavité tétraédrique et O un atome d'oxygène. La couche octaédrique est constituée d'octaèdres $\square O_6$, les 6 sommets étant communs à 3 octaèdres, $\square O_{6/3}$, $\square$ représentant une cavité octaédrique. En limitant le contenu du feuillet à une demi-maille, 4 tétraèdres $\Delta_4 O_{(6+4)}$ sont situés deux à deux de part et d'autre de 3 octaèdres $\square_3 O_6$ et ont en commun 4 sommets : $\Delta_4 \square_3 O_{(12)}$. Deux atomes O de la couche octaédrique ne participent pas à cette mise en commun et sont saturés par des atomes H : $\Delta_4 \square_3 O_{10}(OH)_2$. Le plus souvent les cavités tétraédriques $\Delta$ sont occupées par des atomes de silicium et les 3 cavités octaédriques $\square$ par des atomes de magnésium : $Si_4 Mg_3 O_{10}(OH)_2$. Cet édifice est électriquement neutre.

L'élément silicium tétraédrique peut être substitué par des éléments trivalents tels que par exemple l'aluminium, le gallium. De même, l'élément magnésium octaédrique peut être substitué par des éléments trivalents (Al ou Fe par exemple) et/ou divalents (Co par exemple) et/ou monovalents (Li par exemple). Ces substitutions confèrent globalement des charges négatives à l'édifice. Celles-ci entraînent l'existence de cations de compensation échangeables situés dans l'espace interfoliaire. L'épaisseur de l'espace interfoliaire dépend de la nature des cations de compensation et de leur état d'hydratation. Cet espace est d'ailleurs capable d'accueillir d'autres espèces chimiques comme de l'eau, des amines, des sels, des alcools, des bases, etc..

L'existence de groupes -OH entraîne une instabilité thermique due à la réaction de déshydroxylation d'équation:

$$2 \text{ -OH} \longrightarrow \text{-O-} + H_2O.$$

A cet égard l'introduction, lors de la synthèse, de l'élément fluor dans la structure en place des groupes -OH conduit à des phyllosilicates de stabilité thermique nettement améliorée.

Les phyllosilicates possèdent une structure microporeuse liée, entre autres, à la nature, au nombre et à la taille des cations de compensation. La variation de l'épaisseur de l'espace interfoliaire par l'échange des cations de compensation contre d'autres cations entraîne des changements des propriétés adsorbantes. Seules les molécules ayant certaines formes et certaines dimensions sont capables d'entrer dans l'espace interfoliaire. L'insertion de piliers (composés minéraux permettant d'écarter les feuillets) dans l'espace interfoliaire lui confère une épaisseur plus importante. Les phyllosilicates à piliers sont des solides microporeux dont les propriétés rejoignent celles des zéolithes. Les phyllosilicates sont utilisés comme solides microporeux en adsorption et en catalyse.

La composition chimique des phyllosilicates, par la nature des éléments présents dans les cavités tétraédriques et octaédriques et la nature des cations de compensation, est également un facteur important intervenant dans la sélectivité de l'échange de cations, dans la sélectivité d'adsorption et surtout dans l'activité catalytique. Ceci s'explique d'une part par la nature et l'intensité des interactions entre leurs surfaces interne et externe et d'autre part les molécules adsorbées. Les phyllosilicates sont utilisés comme catalyseurs ou supports de catalyseurs dans le craquage, dans la modification d'hydrocarbures ainsi que dans l'élaboration de nombreuses molécules.

Des gisements de phyllosilicates trioctaédriques sont connus. Cependant, leurs applications industrielles sont limitées par leur qualité variable (présence d'impuretés). Ces problèmes sont à l'origine d'importantes recherches en vue de synthétiser des phyllosilicates ayant les qualités requises et les propriétés souhaitées.

Trois grandes méthodes de préparation des phyllosilicates sont distinguées: la transformation des minéraux existants, la synthèse en milieu fondu (absence d'eau, haute température et forte pression) et la synthèse hydrothermale.

La troisième méthode est la plus intéressante. Elle permet d'obtenir des phyllosilicates bien cristallisés dans des conditions opératoires modérées, proches de celles utilisées dans le cas des zéolithes, pour des durées de synthèse raisonnables.

La plupart des synthèses hydrothermales de phyllosilicates sont effectuées en milieu basique, c'est-à-dire en présence d'ions $OH^-$, à des pH supérieurs à 7. Comme rappelé précédemment, la substitution de l'élément F aux groupes OH dans la structure améliore la stabilité thermique. L'élément fluor F peut être introduit dans la structure directement lors de la synthèse, à condition que le milieu de synthèse dudit phyllosilicate contienne au moins une source de cet élément.

De nombreuses publications sont consacrées à la synthèse des phyllosilicates 2:1 trioctaédriques (Luptakova V. et Masar J., Acta F.R.N. Univ. Comen Chimia XXX, 81-88, 1982 ; Torii et Iwasaki T., Clay Sc, 6, 1-16, 1987 entre autres) dont certaines mettent en oeuvre des cations d'éléments de transition, tels que les éléments cobalt et nickel (Hazem M. et Wones D.R., Am. Miner., 57,103-129, 1972; Bruce L.A., Sauders J.V. et Turney T.W., Clays and Clay Min., 34, n°1, 25-36, 1986; Mizutani T. et al., Bull. Chem. Soc. Jap., 63, 2094-2098, 1990). Mais ce n'est que depuis une trentaine d'années que de telles synthèses, effectuées en présence de l'élément F, sont signalées (Granquist W.T. et Pollack S.S., 8th Nat. Conf. on Clays andCl Min., Norman Okiahoma, 150-169, 1959; Barrer R.M. et Dicks L.W.R., J. Chem. Soc, A, 1523-1529, 1967).

Plus récemment, la synthèse hydrothermale de phyllosilicates en milieu fluoré a fait l'objet de développements nouveaux. Deux brevets japonais (Torii Kazuo, JP 62 292 615 et JP 62 292 616) revendiquent une gamme de produits de type smectite obtenus en présence d'acide silicique, de sels d'aluminium et de magnésium, d'ions alkylammonium, de sels de métaux alcalins et alcalino-terreux, et éventuellement de sels fluorés. Toutes les synthèses sont réalisées en milieu basique (pH supérieur à 7).

Un milieu de synthèse basique n'est pas favorable à la cristallisation de phyllosilicates riches en élément silicium. Il est en effet bien connu que l'augmentation du pH du milieu de synthèse entraîne une diminution du rapport Si/Al dans le phyllosilicate qui cristallise. Ce fait est lié à la solubilité du phyllosilicate qui est d'autant plus grande en milieu basique que le rapport Si/Al est grand avec comme conséquence la chute du rendement de synthèse. En outre, l'utilisation d'un milieu de synthèse basique n'est pas favorable à l'obtention de phyllosilicates riches en élément fluor du fait de la concentration forte de ce milieu en ions $OH^-$. Par contre l'introduction de magnésium dans la couche octaédrique favorise l'obtention de phyllosilicates riches en élément fluor.

De nombreuses applications, particulièrement en catalyse acide, nécessitent des formes protonées et complétement débarrassées des cations de compensation introduits lors de la synthèse. Ces formes peuvent être obtenues par des procédés répétés et longs d'échanges de ces cations contre des ions $NH_4^+$ suivis d'une calcination pour générer la forme protonée. La synthèse en présence d'ions $NH_4^+$ est alors un avantage évident. Or ces ions $NH_4^+$ n'existent qu'en milieu de pH inférieur à 9, car au-delà de ce pH les ions $NH_4^+$ libèrent les molécules $NH_3$. De plus des synthèses effectuées dans des milieux à pH inférieur à 9 sont souvent difficiles et longues à cause de la solubilité faible de l'éléments silicium. L'utilisation d'anions $F^-$ comme agents mobilisateurs de la silice et des autres éléments permet de réaliser des synthèses en présence d'ions $NH_4^+$, en milieu neutre et acide.

Selon l'art antérieur, la synthèse de phyllosilicates 2:1 trioctaédriques en présence d'ions $F^-$ s'effectue soit en milieu basique, soit en milieu de pH minimal égal à 7 et à des températures variables: température supérieure à 200°C pour des synthèses rapides, température ambiante pour des synthèses de plus longue durée.

La présente invention a pour objet de nouveaux phyllosilicates 2:1 trioctaédriques et leur procédé de préparation qui confère de plus aux phyllosilicates 2:1 trioctaédriques selon l'invention des propriétés améliorées, particulièrement des propriétés acides et de stabilité thermique.

L'originalité de la présente invention, comme on le verra plus loin, est l'obtention de nouveaux phyllosilicates 2:1 trioctaédriques en milieu fluoré et à pH inférieur à 7, en présence de l'acide HF, et/ou d'un autre acide, et/ou d'une autre source d'anions $F^-$, et à des températures inférieures à 250°C. Dans les conditions de synthèse de la présente invention, les taux de substitution tétraédrique et octaédrique des phyllosilicates 2:1 trioctaédriques obtenus peuvent être avantageusement contrôlés, entre autres par le pH du milieu et la composition chimique de l'hydrogel de départ.

Les phyllosilicates 2:1 trioctaédriques selon l'invention sont notamment caractérisés par:

a) la formule chimique générale approchée suivante (pour une demi-maille):

$$M^{m+}_{(x+\varepsilon y)/m}((Si_{(4-x)}T_x)(Mg_{3-y}S_y)O_{10}(OH_{(2-z)}F_z))^{(x+\varepsilon y)-},nH_2O$$

où S est au moins un élément choisi dans le groupe formé par l'élément monovalent Li, les éléments divalents Zn, Ni, Co, Mn, Fe et Cu, et les éléments trivalents Al et Ga,

T est au moins un élément du groupe IIIA et/ou le fer,

M est au moins un cation de compensation issu du milieu réactionnel, ou introduit par au moins un procédé d'échange ionique, choisi dans le groupe formé par les cations des éléments des groupes IA, IIA et VIII de la classification périodique des éléments, les cations de terres rares (cations d'éléments de numéro atomique de 57 à 71 inclus), les cations organiques contenant de l'azote (parmi lesquels les alkylammonium et les arylammonium), et le cation ammonium.

où m est la valence du cation M,

où x est un nombre compris entre 0 et 2, y est un nombre compris entre 0 et 1, z est un nombre compris entre 0 et 2, n est un nombre réel positif ou nul,

où $\varepsilon$ est égal à 1 quand S est un élément monovalent,

où $\varepsilon$ est égal à 0 quand S est un élément divalent,

où $\varepsilon$ est égal à -1 quand S est un élément trivalent.

b) un diagramme de diffraction des rayons X caractérisé par la présence des raies suivantes:

- une raie correspondant à une valeur de $d_{hkl}$ égale à 1,52 $\mp$ 0,01 $10^{-10}$ m

- deux autres raies correspondant à des valeurs de $d_{hkl}$ égales à 4,53 $\mp$ 0,02 $10^{-10}$ m et 2,56 $\mp$ 0,045 $10^{-10}$ m

- au moins une réflexion 001 telle que $d_{001}$ soit compris entre 10,5 et 19,5 $10^{-10}$ m suivant la formule chimique desdits phyllosilicates.

c) une teneur en fluor telle que le rapport molaire $F^-/Si$ est compris entre 0,1 et 4, de préférence entre 0,1 et 1.

Ils sont également caractérisés par un milieu de synthèse fluoré dans lequel est présent l'acide HF et/ou un autre acide, à un pH inférieur ou égal à 7 et de façon générale à un pH compris entre 0,5 et 6,5, de manière préférée à un pH compris entre 0,5 et 6.

L'invention concerne également un procédé de préparation desdits phyllosilicates 2:1 trioctaédriques qui consiste en ce que :

a) on forme un mélange réactionnel en solution aqueuse ayant un pH inférieur à 7, comprenant notamment de l'eau, au moins une source de l'élément silicium, au moins une source de l'élément magnésium, et éventuellement (si y≠0) au moins une source d'un élément S, monovalent (Li), divalent (Zn, Ni, Co, Mn, Fe, Cu), ou trivalent (Al, Ga), et/ou au moins une source d'un élément T choisi dans le groupe formé par les éléments du groupe IIIA de la classification périodique des éléments et le fer, et au moins une source d'ions $F^-$, au moins une source d'un acide, de préférence HF, au moins une source d'un cation de compensation. Ce dernier est choisi dans le groupe formé par les cations des éléments des groupes IA, IIA et VIII de la classification périodique des éléments, les cations de terres rares (cations d'éléments de numéro atomique de 57 à 71 inclus), les cations organiques contenant de l'azote (parmi lesquels les alkylammonium et les arylammonium) et le cation ammonium. Tout autre cation d'origine organique contenant de l'azote pouvant procurer des effets similaires peut aussi être utilisé.

Ledit mélange a une composition, en termes de rapport molaire, comprise dans les intervalles de valeurs suivants :

Mg/Si: 0-50, de préférence 0-10,
S/Si: 0-30, de préférence 0-10,
T/Si: 0-10, de préférence 0-5,
$F^-_{total}$: 0,1-10, de préférence 0,1-8,
$M^{m+}/Si$: 0-10, de préférence 0-8,
$H_2O/Si$:5-100, de préférence 10-80,
Acide/Si: 0,1-10, de préférence 0,1-8,
HF/Si: 0-10, de préférence 0-8.

$F^-_{total}$ représente la somme des ions $F^-$, provenant éventuellement de l'acide HF dans le cas de l'utilisation de HF comme source d'acide, et éventuellement d'une autre source d'ions $F^-$.

b) on maintient ledit mélange réactionnel à une température inférieure à 250 °C, et de préférence inférieure à 230 °C, jusqu'à ce que l'on obtienne un composé cristallin, et

c) ledit composé est échangé puis calciné à une température supérieure à 350 °C, de préférence supérieure à 450°C, par exemple sous un mélange d'air et d'azote.

La présence de l'élément F dans les phyllosilicates 2:1 trioctaédriques selon l'invention, apporté soit par l'acide HF soit au moyen d'autres sources au cours de l'étape de synthèse, confère auxdits phyllosilicates une propriété de stabilité thermique nettement améliorée par rapport aux phyllosilicates 2:1 trioctaédriques préparés selon l'art antérieur. De même, les propriétés d'acidité des phyllosilicates 2:1 trioctaédriques selon l'invention sont considérablement améliorées par rapport à celle des solides phyllosilicates 2:1 trioctaédriques de l'art antérieur ; ce que montrent la thermodésorption de l'ammoniac et la spectroscopie infrarouge de bases faibles adsorbées (CO, $H_2S$).

On peut avantageusement chauffer le mélange réactionnel dans un autoclave revêtu intérieurement de polytétrafluoroéthylène à une température inférieure à 250°C, de préférence inférieure à 230°C, pendant une durée qui peut varier de quelques heures à quelques jours selon la température de réaction, jusqu'à l'obtention d'un composé cristallisé que l'on sépare des eaux mères et qui est ensuite lavé à l'eau distillée puis séché.

De manière avantageuse, on peut préparer ledit mélange réactionnel à un pH compris entre 0,5 et 7, et de manière préférée entre 0,5 et 6,5 et de manière plus préférée entre 0,5 et 6.

Selon un mode préféré de la préparation de phyllosilicates 2:1 trioctaédriques selon l'invention, les rapports molaires des constituants du mélange réactionnel sont compris dans les intervalles de valeurs suivants:

Mg/Si: 0-3,
S/Si: 0-1,
T/Si: 0-2,
$F^-_{total}$: 0,1-6,
$M^{m+}/Si$: 0-5,

$H_2O/Si$: 10-70,
Acide/Si: 0,1-6,
HF/Si: 0-0,6.

$F^-_{total}$ représente la somme des ions $F^-$, provenant de l'acide HF dans le cas de l'utilisation de HF comme source d'acide, et éventuellement d'autres sources d'ions $F^-$ ajoutées à cet acide HF.

On peut avantageusement travailler en milieu agité, éventuellement en présence de germes constitués de cristaux de phyllosilicates 2:1 trioctaédriques.

Le pH du milieu réactionnel, inférieur à 7, peut être obtenu soit directement à partir de l'un ou plusieurs des réactifs mis en oeuvre, soit par l'ajout d'un acide, d'une base, d'un sel acide, d'un sel basique ou d'un mélange tampon complémentaire.

De nombreuses sources de l'élément silicium peuvent être utilisées, parmi lesquelles on peut citer à titre d'exemple les silices sous forme d'hydrogels, d'aérogels, de suspensions colloïdales, les silices résultant de la précipitation de solutions de silicates solubles ou de l'hydrolyse d'esters siliciques comme $Si(OC_2H_5)_4$ ou de complexes comme $(NH_4)_2SiF_6$, les silices préparées par des traitements d'extraction de composés naturels ou synthétiques comme les silicates d'aluminium, les aluminosilicates, les zéolithes.

Parmi les sources de l'élément bore, on peut utiliser par exemple l'oxyde $B_2O_3$, l'acide $H_3BO_3$, des sels comme le borax, le tétraborate d'ammonium ou des molécules hydrolysables comme $BF_3$, $BCl_3$ et des esters de l'acide $H_3BO_3$ comme le triéthylborate.

Parmi les sources de l'élément magnésium, on peut utiliser, par exemple, l'oxyde MgO, l'hydroxyde $Mg(OH)_2$, les sels tels que les chlorures, fluorure, nitrate et sulfate de magnésium, des sels d'acides organiques.

Parmi les sources de l'élément aluminium que l'on peut utiliser, on peut citer des oxydes, des hydroxydes, des hydroxy-oxydes d'aluminium, des aluminates, des sels d'aluminium, des esters comme le tripropylaluminate.

Parmi les sources de l'élément gallium, on peut utiliser des oxydes, des hydroxydes, des hydroxy-oxydes, des gallates, des sels et des esters.

Parmi les sources de l'élément fer, on peut utiliser des oxydes, des hydroxy -oxydes, des hydroxydes, des sels.

Au lieu d'utiliser des sources séparées des divers éléments cités ci-dessus, on peut utiliser des sources dans lesquelles au moins deux éléments sont associés.

Les ions alkylammonium et arylammonium sont ajoutés au mélange réactionnel sous forme d'un de leurs sels (comme par exemple le fluorohydrate de tétraéthylammonium) ou de leur hydroxyde. On peut aussi ajouter au moins une amine qui est ensuite transformée in situ en cation lors de l'ajustement du pH à une valeur inférieure à 7.

Les anions fluorure ($F^-$) sont ajoutés sous forme de l'acide HF et/ou de sels de métaux alcalins (par exemple NaF), de sels $NH_4F$, $NH_4HF_2$, de fluorhydrates d'amines ou de composés hydrolysables dans l'eau et pouvant libérer des ions $F^-$.

La calcination, étape c) de la préparation décrite ci-avant, se déroule avantageusement à une température comprise entre 450 et 650 °C sous gaz sec, comme par exemple l'air ou un gaz inerte.

Après l'étape d'élimination des composés organiques (étape c) de la préparation décrite ci-avant) et éventuellement après un traitement de défluoration partielle ou totale, on peut introduire dans les phyllosilicates 2:1 trioctaédriques selon l'invention, par des techniques d'échanges ioniques bien connues de l'art antérieur, au moins un élément choisi dans le groupe formé par les terres rares et les éléments des groupes IA, IIA, VIII, IB, IIB, IIIB, et IVB de la classification périodique des éléments dont le cation peut être préparé en milieu aqueux, et les composés de ces éléments. Par exemple, on peut introduire un cation choisi dans le groupe formé par les cations des métaux alcalins, les cations alcalino-terreux, les cations de terres rares, Co(II), Pt(IV).

L'identification des phyllosilicates 2:1 trioctaédriques selon l'invention peut se faire de manière aisée à partir de leur diagramme de diffraction des rayons X sur poudre non orientée préférentiellement. Ce diagramme de diffraction peut être obtenu à l'aide d'un diffractomètre en utilisant la méthode classique des poudres avec le rayonnement $K\alpha$ du cuivre. Un étalon interne permet de déterminer précisément les valeurs de $2\theta$ associées aux pics de diffraction. Les distances interréticulaires $d_{hkl}$ sont calculées à partir de la relation de Bragg.

Les phyllosilicates 2:1 trioctaédriques selon la présente invention sont caractérisés par la présence dans leur spectre de diffraction des rayons X d'au moins les raies suivantes:

- une raie correspondant à une valeur de $d_{hkl}$ égale à $1,52 \mp 0,01 \ 10^{-10}$ m

- deux raies correspondant à des valeurs de $d_{hkl}$ égales à $4,53 \mp 0,02 \ 10^{-10}$ m et $2,56 \mp 0,045 \ 10^{-10}$ m

- au moins une réflexion 001 telle que $d_{001}$ soit compris entre 10,5 et $19,6 \ 10^{-10}$ m suivant la formule chimique desdits phyllosilicates.

Les phyllosilicates 2:1 trioctaédriques selon l'invention peuvent être utilisés seuls ou en mélange avec une matrice au sein d'un catalyseur.

EP 0 537 064 B1

Les matrices que l'on emploie habituellement sont choisies dans le groupe formé par l'alumine, la silice, la magnésie, l'oxyde de titane, la zircone, les combinaisons de deux au moins de ces composés et les combinaisons alumine-oxyde de bore.

La matrice est de préférence choisie dans le groupe formé par la silice, l'alumine, la magnésie, les mélanges silice-alumine et les mélanges silice-magnésie.

Le catalyseur possède alors une teneur pondérale en phyllosilicate selon l'invention comprise entre 20 et 99,5%.

Le catalyseur contenant le phyllosilicate selon l'invention peut renfermer en outre une fonction hydrogénante ou déshydrogénante, constituée en général par au moins un métal et/ou composé de métal choisi parmi les groupes IA, VIB et VIII de la classification périodique des éléments, par exemple le platine, le palladium et/ou le nickel.

Les exemples suivants illustrent l'invention sans toutefois en limiter la portée.

Exemple 1

A 36 ml d'eau distillée, on ajoute successivement et conformément aux indications fournies :

- 1,04 g de l'acide HF à 40% (Fluka),
- 6,84 g du sel $(CH_3CO_2)_2Mg,4H_2O$ (Prolabo) sous agitation vigoureuse, et
- 2,50 g de l'oxyde $SiO_2$ pulvérulent (Aerosil 130 de Degussa) sous agitation modérée.

La composition de l'hydrogel ainsi préparé, rapportée à une mole d'oxyde $SiO_2$ est:
1,0 $SiO_2$ ; 0,75 MgO ; 0,50 HF ; 48 $H_2O$
soit en termes de rapport molaire :
Mg/Si = 0,75
$F^-$/Si = 0,50
acide/Si = 0,50
$H_2O$/Si = 48
Cette composition ne tient pas compte de l'eau apportée par la source de magnésium et par l'acide HF.

L'hydrogel ainsi obtenu est mûri 4 heures à la température ambiante (20 °C) sous agitation modérée. Le pH est alors voisin de 4,5.

La cristallisation s'effectue ensuite dans un autoclave en acier, chemisé par un revêtement de téflon, d'une contenance de 120 ml, à 220 °C, sous pression autogène durant 192 heures sans agitation. L'autoclave est ensuite refroidi à l'air ambiant.

Le produit est ensuite récupéré, filtré et lavé abondamment à l'eau distillée. Il est alors séché à 40-50 °C durant 24 heures.

Au bout de ces 24 heures, le produit obtenu est caractérisé par son diagramme de diffraction des rayons X indiqué ci-après, l'enregistrement étant effectué à température et humidité ambiante.

| $d_{khl}(\text{Å})$ | I/Io |
|---|---|
| 14,1 | 100 b |
| 4,8 | 3 |
| 4,54 | 17 b |
| 3,49 | 2 |
| 2,57 | 13 b |
| 2,27 | 1 |
| 1,705 | 1 |
| 1,514 | 16 |
| b: bande large (est indiquée la valeur $d_{hkl}$ du maximum d'intensité de la bande) | |

Ce diffractogramme est caractéristique de celui des phyllosilicates 2:1 trioctaédriques selon l'invention.
La teneur pondérale en fluor du phyllosilicate obtenu est de 6%.

6

Exemple 2:

A 36 g d'eau distillée, on ajoute successivement et conformément aux indications fournies :

- 1,40 g de l'acide HF à 40% (Fluka),
- 15,20 g du sel $(CH_3COO)_2Mg,4H_2O$ (Prolabo) sous agitation vigoureuse,
- 2,50 g de l'oxyde $SiO_2$ pulvérulent (Aerosil 130 de Degussa) sous agitation modérée.

La composition de l'hydrogel ainsi préparé, rapportée à une mole d'oxyde $SiO_2$ est:
1,0 $SiO_2$ ; 1,67 MgO ; 0,67 HF; 48 $H_2O$
soit en termes de rapport molaire :
Mg/Si = 1,67
$F^-$/Si = 0,67
acide/Si = 0,67
$H_2O$/Si = 48
Cette composition ne tient pas compte de l'eau apportée par la source de magnésium et par l'acide HF.

L'hydrogel ainsi obtenu est mûri 4 heures à la température ambiante (20 °C) sous agitation modérée. Le pH est alors voisin de 5.

La cristallisation s'effectue ensuite dans un autoclave en acier, chemisé par un revêtement de téflon, d'une contenance de 120 ml, à 220 °C, sous pression autogène durant 264 heures sans agitation. L'autoclave est ensuite refroidi à l'air ambiant.

Le produit est ensuite récupéré, filtré et lavé abondamment à l'eau distillée. Il est alors séché à 40-50 °C durant 24 heures.

Au bout de ces 24 heures, le produit obtenu est caractérisé par son diagramme de diffraction des rayons X indiqué ci-après, l'enregistrement étant effectué à température et humidité ambiante.

| $d_{khl}$(Å) | I/Io |
|---|---|
| 18,8 | 100 b |
| 9,5 | 32 |
| 6,26 | 3 |
| 4,54 | 16 b |
| 3,71 | 3 |
| 2,57 | 11 b |
| 1,711 | 7 |
| 1,518 | 16 |
| b: bande large (est indiquée la valeur $d_{hkl}$ du maximum d'intensité de la bande) | |

Ce diffractogramme est caractéristique de celui des phyllosilicates 2:1 trioctaédriques selon l'invention.
La teneur pondérale en fluor du phyllosilicate obtenu est de 6%.

Exemple 3:

A 36 ml d'eau distillée, on ajoute successivement et conformément aux indications fournies:

- 0,73 g de l'acide HF à 40% (Fluka),
- 4,84 g du sel $(CH_3CO_2)_2Mg,4H_2O$ (Prolabo) sous agitation vigoureuse,
- 0,46 g de l'oxyde AlOOH (Catapal B Vista), et
- 2,50 g de l'oxyde $SiO_2$ pulvérulent (Aerosil 130 de Degussa) sous agitation modérée.

La composition de l'hydrogel ainsi préparé, rapportée à une mole d'oxyde $SiO_2$ est:
1,0 $SiO_2$ ; 0,53 MgO ; 0,075 $Al_2O_3$ ; 0,35 HF ; 48 $H_2O$

7

soit en termes de rapport molaire :
Mg/Si = 0,53
Al/Si = 0,15
$F^-$/Si = 0,35
acide/Si = 0,35
$H_2O$/Si = 48

Cette composition ne tient pas compte de l'eau apportée par la source de magnésium, d'aluminium et par l'acide HF.

L'hydrogel ainsi obtenu est mûri 4 heures à la température ambiante (20 °C) sous agitation modérée. Le pH est alors voisin de 4,5.

La cristallisation s'effectue ensuite dans un autoclave en acier, chemisé par un revêtement de téflon, d'une contenance de 120 ml, à 220°C, sous pression autogène durant 187 heures sans agitation. L'autoclave est ensuite refroidi à l'air ambiant.

Le produit est ensuite récupéré, filtré et lavé abondamment à l'eau distillée. Il est alors séché à 40-50°C durant 24 heures.

Au bout de ces 24 heures, le produit obtenu est caractérisé par son diagramme de diffraction des rayons X indiqué ci-après, l'enregistrement étant effectué à température et humidité ambiante.

| $d_{khl}$(Å) | I/Io |
|---|---|
| 14,8 | 100 b |
| 4,9 | 1 |
| 4,52 | 16 b |
| 3,60 | 1 b |
| 2,92 | 3 b |
| 2,593 | 10 b |
| 1,712 | 4 |
| 1,522 | 13 |
| b: bande large (est indiquée la valeur $d_{hkl}$ du maximum d'intensité de la bande) | |

Ce diffractogramme est caractéristique de celui des phyllosilicates 2:1 trioctaédriques selon l'invention.

La teneur pondérale en fluor du phyllosilicate obtenu est de 5%.

Exemple 4:

A 36 ml d'eau distillée, on ajoute successivement et conformément aux indications fournies :

- 0,94 g de l'acide HF à 40% (Fluka),
- 7,20 g du sel $(CH_3CO_2)_2Mg,4H_2O$ (Prolabo) sous agitation vigoureuse, et
- 0,093 g du sel NaF (Prolabo),
- 0,16 g de l'oxyde AlOOH (Catapal B Vista),
- 2,50 g de l'oxyde $SiO_2$ pulvérulent (Aerosil 130 de Degussa) sous agitation modérée.

La composition de l'hydrogel ainsi préparé, rapportée à une mole d'oxyde $SiO_2$ est:
1,0 $SiO_2$ ; 0,026 $Al_2O_3$; 0,053 NaF; 0,79 MgO; 0,45 HF ; 48 $H_2O$
soit en termes de rapport molaire :
Mg/Si = 0,79
Al/Si = 0,052
Na/Si = 0,053
$F^-$/Si = 0,503
acide/Si = 0,45
$H_2O$/Si = 48

Cette composition ne tient pas compte de l'eau apportée par la source de magnésium, d'aluminium et par l'acide HF.

L'hydrogel ainsi obtenu est mûri 4 heures à la température ambiante (20 °C) sous agitation modérée. Le pH est alors voisin de 4,5.

La cristallisation s'effectue ensuite dans un autoclave en acier, chemisé par un revêtement de téflon, d'une contenance de 120 ml, à 220 °C, sous pression autogène durant 260 heures sans agitation. L'autoclave est ensuite refroidi à l'air ambiant.

Le produit est ensuite récupéré, filtré et lavé abondamment à l'eau distillée. Il est alors séché à 40-50°C durant 24 heures.

Au bout de ces 24 heures, le produit obtenu est caractérisé par son diagramme de diffraction des rayons X indiqué ci-après, l'enregistrement étant effectué à température et humidité ambiante.

| $d_{khl}$(Å) | I/Io |
|---|---|
| 14,1 | 100 b |
| 4,53 | 31 b |
| 2,579 | 15 b |
| 2,275 | 1 |
| 1,710 | 5 |
| 1,518 | 12 |
| b: bande large (est indiquée la valeur $d_{hkl}$ du maximum d'intensité de la bande) | |

Ce diffractogramme est caractéristique de celui des phyllosilicates 2:1 trioctaédriques selon l'invention.

La teneur pondérale en fluor du phyllosilicate obtenu est de 5%.

Exemple 5:

A 36 ml d'eau distillée, on ajoute successivement et conformément aux indications fournies :

- 0,83 g de l'acide HF à 40% (Fluka),
- 6,66 g du sel $(CH_3CO_2)_2Mg,4H_2O$ (Prolabo) sous agitation vigoureuse,
- 0,044 g du sel NaF (Prolabo),
- 0,027 g du sel LiF (Prolabo),
- 2,50 g de l'oxyde $SiO_2$ pulvérulent (Aerosil 130 de Degussa) sous agitation modérée.

La composition de l'hydrogel ainsi préparé, rapportée à une mole d'oxyde $SiO_2$ est:

1,0 $SiO_2$ ; 0,73 MgO ; 0,025 LiF; 0,025 NaF; 0,40 HF; 48 $H_2O$

soit en termes de rapport molaire :

Mg/Si = 0,73
Li/Si = 0,025
Na/Si = 0,025
$F^-$/Si = 0,45
acide/Si = 0,40
$H_2O$/Si = 48

Cette composition ne tient pas compte de l'eau apportée par la source de magnésium et par l'acide HF.

L'hydrogel ainsi obtenu est mûri 4 heures à la température ambiante (20 °C) sous agitation modérée. Le pH est alors voisin de 4,5.

La cristallisation s'effectue ensuite dans un autoclave en acier, chemisé par un revêtement de téflon, d'une contenance de 120 ml, à 220 °C, sous pression autogène durant 192 heures sans agitation. L'autoclave est ensuite refroidi à l'air ambiant.

Le produit est ensuite récupéré, filtré et lavé abondamment à l'eau distillée. Il est alors séché à 40-50°C durant 24 heures.

Au bout de ces 24 heures, le produit obtenu est caractérisé par son diagramme de diffraction des rayons X indiqué ci-après, l'enregistrement étant effectué à température et humidité ambiante.

| $d_{khl}(Å)$ | I/Io |
|---|---|
| 23,5 | sh |
| 16,5 | sh |
| 13,7 | 100 b |
| 8,2 | 1 b |
| 6,0 | 1 b |
| 4,52 | 50 b |
| 2,566 | 27 b |
| 2,277 | 2 |
| 1,705 | 8 |
| 1,520 | 20 |
| b: bande large (est indiquée la valeur $d_{hkl}$ du maximum d'intensité de la bande). sh: épaulement. | |

Ce diffractogramme est caractéristique de celui des phyllosilicates 2:1 trioctaédriques selon l'invention.
La teneur pondérale en fluor du phyllosilicate obtenu est de 5%.

**Revendications**

1. Phyllosilicates 2:1 trioctaédriques cristallisés à l'exception de la saponite caractérisés par :

a) la formule chimique générale approchée suivante (pour une demi-maille):

$$M^{m+}{}_{(x+\varepsilon y)/m}((Si_{(4-x)}T_x)(Mg_{3-y}S_y)O_{10}(OH_{(2-z)}F_z))^{(x+\varepsilon y)-},nH_2O$$

où, Si S est présent, S est au moins un élément choisi dans le groupe formé par l'élément monovalent Li, les éléments divalents Zn, Ni, Co, Mn, Fe et Cu, et les éléments trivalents Al et Ga,
Si T est présent,
T est au moins un élément choisi dans le groupe formé par les éléments du groupe IIIA et le fer,
M est au moins un cation de compensation issu du milieu réactionnel, ou introduit par au moins un procédé d'échange ionique, choisi dans le groupe formé par les cations des éléments des groupes IA, IIA et VIII de la classification périodique des éléments, les cations de terres rares (cations d'éléments de numéro atomique de 57 à 71 inclus), les cations organiques contenant de l'azote (parmi lesquels les alkylammonium et les arylammonium), et le cation ammonium,
où m est la valence du cation M,
où x est un nombre compris entre 0 et 2, y est un nombre compris entre 0 et 1, z est un nombre compris entre 0 et 2 avec $z \neq 0$, n est un nombre réel positif ou nul,
où $\varepsilon$ est égal à 1 quand S est un élément monovalent,
où $\varepsilon$ est égal à 0 quand S est un élément divalent,
où $\varepsilon$ est égal à -1 quand S est un élément trivalent.

b) un diagramme de diffraction des rayons X caractérisé par la présence des raies suivantes:

-    une raie correspondant à une valeur de $d_{hkl}$, égale à $1,52 \mp 0,01\ 10^{-10}$ m

-    deux autres raies correspondant à des valeurs de $d_{hkl}$, égales à $4,53 \mp 0,02\ 10^{-10}$ m et $2,56 \mp 0,045\ 10^{-10}$ m

- au moins une réflexion 001 telle que $d_{001}$ soit compris entre 10,5 et 19,5 $10^{-10}$ m suivant la formule chimique dudit phyllosilicate.

c) une teneur en fluor telle que le rapport molaire $F^-$/Si est compris entre 0,1 et 4.

2. Phyllosilicates 2:1 trioctaédriques cristallisés selon la revendication 1 et ayant été synthétisés dans un milieu de pH compris entre 0,5 et 6.

3. Phyllosilicates 2:1 trioctaédriques cristallisés selon l'une des revendications 1 et 2 dont la teneur en fluor est telle que le rapport molaire $F^-$/Si est compris entre 0,1 et 1.

4. Catalyseur renfermant au moins un phyllosilicate 2:1 trioctaédrique selon l'une des revendications 1 à 3 et une matrice.

5. Catalyseur renfermant au moins un phyllosilicate 2:1 trioctaédrique selon l'une des revendications 1 à 3, une matrice et au moins un métal et/ou composé de métal choisi parmi les groupes IA, VIB et VIII de la classification périodique des éléments.

6. Procédé de préparation de phyllosilicates 2:1 trioctaédriques selon l'une des revendications 1 à 3 caractérisé en ce que:

a) on forme un mélange réactionnel en solution aqueuse ayant un pH compris entre 0,5 et 6, comprenant notamment de l'eau, au moins une source de l'élément silicium, au moins une source de l'élément magnésium, et éventuellement au moins une source d'un élément S, choisi dans le groupe formé par l'élément monovalent Li, les éléments divalents Zn, Ni, Co, Mn, Fe et Cu, et les éléments trivalents Al et Ga, et éventuellement au moins une source d'un élément T choisi dans le groupe formé par les éléments du groupe IIIA de la classification périodique des éléments et le fer, et au moins une source d'ions $F^-$, au moins une source d'un acide, et éventuellement au moins une source d'un cation de compensation,
ledit mélange ayant une composition, en termes de rapport molaire, comprise dans les intervalles de valeurs suivants :
Mg/Si: 0-50,
S/Si: 0-30,
T/Si: 0-10,
$F^-_{total}$: 0,1-10,
$M^{m+}$/Si: 0-10,
$H_2O$/Si: 5-100,
Acide/Si: 0,1-10,
HF/Si: 0-10.
$F^-_{total}$ représentant la somme des ions $F^-$.

b) on maintient ledit mélange réactionnel à une température inférieure à 250°C, jusqu'à ce que l'on obtienne un composé cristallin, et

c) ledit composé est échangé et calciné à une température supérieure à 350 °C.

7. Procédé selon la revendication 6 dans lequel, dans l'étape a), ledit mélange réactionnel a une composition, en termes de rapport molaire, comprise dans les intervalles de valeurs suivants:
Mg/Si: 0-10,
S/Si: 0-10,
T/Si: 0-5,
$F^-_{total}$: 0,1-8,
$M^{m+}$/Si: 0-10,
$H_2O$/Si: 5-100,
Acide/Si: 0,1-10,
HF/Si: 0-8.
$F^-_{total}$ représentant la somme des ions $F^-$.

8. Procédé selon l'une des revendications 6 ou 7 dans lequel, dans l'étape a), ledit mélange réactionnel a une composition, en termes de rapport molaire, comprise dans les intervalles de valeurs suivants :

Mg/Si: 0-3,
S/Si: 0-1,
T/Si: 0-2,
$F^-_{total}$: 0,1-6,
$M^{m+}$/Si: 0-5,
$H_2O$/Si: 10-70,
Acide/Si: 0,1-6,
HF/Si: 0-0,6.
$F^-_{total}$ représentant la somme des ions $F^-$.

9. Procédé selon l'une des revendications 7 ou 8, dans lequel, dans l'étape b), on maintient ledit mélange réactionnel à une température de chauffage inférieure à 230°C, jusqu'à ce que l'on obtienne un composé cristallin.

10. Procédé selon l'une des revendications 7 à 9 dans lequel, à l'étape c), ledit composé est échangé et calciné à une température supérieure à 450°C sous gaz sec.

**Claims**

1. Crystallized trioctahedral 2:1 phyllosilicates with the exception of saponite, characterized by:

   a) the following approximate general chemical formula (for a half cell):

   $$M^{m+}_{(x+\varepsilon y)/m}((Si_{(4-x)}T_x)(Mg_{3-y}S_y)O_{10}(OH_{(2-z)}F_z))^{(x+\varepsilon y)-}, nH_2O$$

   where
   if S is present, S is at least one element selected from the group formed by the monovalent element Li, divalent elements Zn, Ni, Co, Mn, Fe and Cu, and trivalent elements Al and Ga,
   if T is present, T is at least one element selected from the group formed by the elements of group IIIA and iron,
   M is at least one compensating cation from the reaction medium, or introduced by at least one ion exchange process, selected from the group formed by cations of elements from groups IA, IIA and VIII of the periodic classification of the elements, rare-earth cations (cations of elements with atomic numbers 57 to 71 inclusive), organic cations containing nitrogen (including alkylammonium and arylammonium), and the ammonium cation,
   m is the valency of cation M,
   x is a number between 0 and 2, y is a number between 0 and 1, z is a number between 0 and 2 (with $z \neq 0$),
   n is a real number which is positive or zero,
   $\varepsilon$ equals 1 when S is a monovalent element,
   $\varepsilon$ equals 0 when S is a divalent element,
   $\varepsilon$ equals -1 when S is a trivalent element;
   b) an X ray diffraction diagram characterized by the presence of the following lines:

   - a line corresponding to a $d_{hkl}$ value of $1.52 \pm 0.01 \times 10^{-10}$ m,
   - two other lines corresponding to $d_{hkl}$ values of $4.53 \pm 0.02 \times 10^{-10}$ m and $2.56 \pm 0.045 \times 10^{-10}$ m,
   - at least one 001 reflection in which $d_{001}$ is in the range 10.5 to $19.5 \ 10^{-10}$ m depending on the chemical formula of said phyllosilicate;

   c) a fluorine content such that the F/Si molar ratio is in the range 0.1 to 4.

2. Crystallized trioctahedral 2:1 phyllosilicates according to claim 1 which have been synthesized in a medium with a pH in the range 0.5 to 6.

3. Crystallized trioctahedral 2:1 phyllosilicates according to claim 1 or claim 2 in which the fluorine content is such that the $F^-$/Si molar ratio is in the range 0.1 to 1.

4. A catalyst containing at least one trioctahedral 2:1 phyllosilicate according to any one of claims 1 to 3, and a matrix.

5. A catalyst containing at least one trioctahedral 2:1 phyllosilicate according to any one of claims 1 to 3, a matrix and at least one metal and/or metallic compound selected from groups IA, VIB and VIII of the periodic classification of the elements.

12

6. A process for the preparation of trioctahedral 2:1 phyllosilicates according to any one of claims 1 to 3, characterized in that:

a) a reaction mixture is formed in an aqueous solution with a pH in the range 0.5 to 6, in particular comprising water, at least one source of the element silicon, at least one source of the element magnesium, and optionally at least one source of an element S, selected from the group formed by the monovalent element Li, divalent elements Zn, Ni, Co, Mn, Fe and Cu, and trivalent elements Al and Ga, and optionally at least one source of an element T selected from the group formed by elements from group IIIA of the periodic classification of the elements and iron, at least one source of ions $F^-$, at least one source of an acid, and optionally at least one source of a compensating cation,
said mixture having a composition, in terms of molar ratios, in the following ranges:

| Mg/Si | 0-50, |
|---|---|
| S/Si | 0-30, |
| T/Si | 0-10, |
| $F^-_{total}$ | 0.1-10, |
| $M^{m+}/Si$ | 0-10, |
| $H_2O/Si$ | 5-100, |
| Acid/Si | 0.1-10, |
| HF/Si | 0-10; |
| $F^-_{total}$ representing the sum of ions $F^-$, | |

b) said reaction mixture is held at a temperature of less than 250°C until a crystalline compound is obtained, and
c) said compound is exchanged and calcined at a temperature of more than 350°C.

7. A process according to claim 6 in which, in step a), said reaction mixture has a composition, in terms of molar ratios, in the following ranges:

| Mg/Si | 0-10, |
|---|---|
| S/Si | 0-10, |
| T/Si | 0-5, |
| $F^-_{total}$ | 0.1-8, |
| $M^{m+}/Si$ | 0-10, |
| $H_2O/Si$ | 5-100, |
| Acid/Si | 0.1-10, |
| HF/Si | 0-8, |
| $F^-_{total}$ representing the sum of ions $F^-$. | |

8. A process according to claim 6 or claim 7 in which, in step a), said reaction mixture has a composition, in terms of molar ratios, in the following ranges:

| | |
|---|---|
| Mg/Si | 0-3; |
| S/Si | 0-1; |
| T/Si | 0-2; |
| $F^-_{total}$ | 0.1-6; |
| $M^{m+}/Si$ | 0-5; |
| $H_2O/Si$ | 10-70; |
| Acid/Si | 0.1-6; |
| HF/Si | 0-0.6, |
| $F^-_{total}$ representing the sum of ions $F^-$. | |

9. A process according to claim 7 or claim 8 in which, in step b), said reaction mixture is held at a heating temperature of less than 230°C until a crystalline compound is obtained.

10. A process according to any one of claims 7 to 9 in which, in step c), said compound is exchanged and calcined at a temperature which is greater than 450°C in a dry gas.

**Patentansprüche**

1. Kristallisierte 2:1-trioctaedrische Phyllosilicate, ausgenommen Saponit, gekennzeichnet durch:

a) die folgende, allgemeine chemische Überschlagsformel (für eine Halbzelle):

$$M^{m+}_{(x+\epsilon y)/m}((Si_{(4-x)}T_x)(Mg_{3-y}S_y)O_{10}(OH)_{(2-z)}F_z))^{(x+\epsilon y)-},nH_2O$$

worin SiS vorliegt,
S wenigstens ein Element ist, das aus der Gruppe ausgewählt ist, die aus dem einwertigen Element Li, den zweiwertigen Elementen Zn, Ni, Co, Mn, Fe und Cu und den dreiwertigen Elementen Al und Ga gebildet ist,
SiT vorliegt,
T wenigstens ein Element ist, das aus der Gruppe ausgewählt ist, die durch die Elemente der Gruppe IIIA und Eisen gebildet ist,
M wenigstens ein Ausgleichskation ist, das aus dem Reaktionsmilieu stammt oder durch wenigstens ein Verfahren des Austausches von Ionen eingeführt ist, die aus der Gruppe ausgewählt sind, die durch die Kationen der Elemente der Gruppen IA, IIA und VIII des Periodensystemes, die Kationen von Seltenen Erden (Kationen von Elementen der Atomzahl von 57 bis 71 einschließlich), den organischen Kationen, welche Stickstoff enthalten (darunter die Alkylammonium- und Arylammoniumkationen) und dem Ammoniumkation gebildet ist,
worin m die Wertigkeit des Kations M ist,
worin x eine zwischen 0 und 2 enthaltene Zahl ist, y eine zwischen 0 und 1 enthaltene Zahl ist, z eine zwischen eine 0 und 2 enthaltene Zahl ist, wobei $z \neq 0$ ist, n eine positive reelle Zahl oder 0 ist,
worin $\epsilon$ gleich 1 ist, wenn S ein einwertiges Element ist,
worin $\epsilon$ gleich 0 ist, wenn S ein zweiwertiges Element ist,
worin $\epsilon$ gleich -1 ist, wenn S ein dreiwertiges Element ist,

b) ein Röntgenbeugungsdiagramm, gekennzeichnet durch die Anwesenheit von folgenden Spektrallinien:

- eine Spektrallinie, entsprechend einem Wert von $d_{hkl}$ von gleich $1,52 \pm 0,01 \times 10^{-10}$m

- zwei weiteren Spektrallinien, entsprechend den Werten von $d_{hkl}$ von gleich $4,53 \pm 0,02 \times 10^{-10}$m und $2,56 \pm 0,045 \times 10^{-10}$m

- wenigstens eine Reflexion 001, so daß $d_{001}$ zwischen einschließlich 10,5 und 19,5 x $10^{-10}$m, folgend der chemischen Formel des Phyllosilicates, enthalten ist,

c) einen Gehalt an Fluor, so daß das molare Verhältnis $F^-$/Si zwischen einschließlich 0,1 und 4 liegt.

2. Kristallisiertes 2:1-trioctaedrisches Phyllosilicat nach Anspruch 1, das in einem Milieu mit einem pH-Wert, der zwischen einschließlich 0,5 und 6 enthalten ist, hergestellt ist.

3. Kristallisiertes 2:1-trioctaedrisches Phyllosilicat nach einem der Ansprüche 1 und 2, dessen Gehalt an Fluor so ist, daß das molare Verhältnis $F^-$/Si zwischen einschließlich 0,1 und 1 enthalten ist.

4. Katalysator, umfassend wenigstens ein 2:1-trioctaedrisches Phyllosilicat nach einem der Ansprüche 1 bis 3 und eine Matrix.

5. Katalysator, umfassend wenigstens ein 2:1-trioctaedrisches Phyllosilicat nach den Ansprüchen 1 bis 3, eine Matrix und wenigstens ein Metall und/oder eine Verbindung eines Metalls, das aus den Gruppen IA, VIB und VIII des Periodensystems ausgewählt ist.

6. Verfahren zur Herstellung von 2:1-trioctaedrischen Phyllosilicaten nach den Ansprüchen 1 bis 3, dadurch gekennzeichnet, daß:

a) man eine Reaktionsmischung in wäßriger Lösung mit einem pH-Wert, der zwischen einschließlich 0,5 und 6 enthalten ist, bildet, die insbesondere Wasser, wenigstens eine Quelle des Siliciumelementes, wenigstens eine Quelle des Magnesiumelementes und gegebenenfalls wenigstens eine Quelle eines Elementes S, ausgewählt aus der Gruppe, die durch das einwertige Element Li, die zweiwertigen Elemente Zn, Ni, Co, Mn, Fe und Cu und die dreiwertigen Elemente Al und Ga gebildet ist und gegebenenfalls wenigstens eine Quelle eines Elementes T, ausgewählt aus der Gruppe, die durch die Elemente der Gruppe IIIA des Periodensystemes und Eisen gebildet ist, und wenigstens eine Quelle von $F^-$-Ionen, wenigstens eine Quelle einer Säure und gegebenenfalls wenigstens eine Quelle eines Ausgleichkations umfaßt,
wobei die Mischung, in Molverhältnis, eine in den folgenden Werteintervallen enthaltene Zusammensetzung besitzt:
Mg/Si: 0-50
S/Si: 0-30
T/Si: 0-10
$F^-_{total}$: 0,1-10
$M^{m+}$/Si: 0-10
$H_2O$/Si: 5-100
Säure/Si: 0,1-10
HF/Si: 0-10,
wobei $F^-_{total}$ die Summe der $F^-$-Ionen darstellt,

b) man die Reaktionsmischung auf einer Temperatur von unterhalb 250°C hält, bis man eine kristalline Verbindung erhält, und

c) die Verbindung ausgetauscht und bei einer Temperatur von oberhalb 350°C kalziniert wird.

7. Verfahren nach Anspruch 6, worin im Schritt a) die Reaktionsmischung eine Zusammensetzung in Molverhältnis besitzt, die in den folgenden Werteintervallen enthalten ist:
Mg/Si: 0-10
S/Si: 0-10
T/Si: 0-5
$F^-_{total}$: 0,1-8
$M^{m+}$/Si: 0-10
$H_2O$/Si: 5-100
Säure/Si: 0,1-10
HF/Si: 0-8,
wobei $F^-_{total}$ die Summe der $F^-$-Ionen darstellt.

8. Verfahren nach einem der Ansprüche 6 oder 7, worin im Schritt a) die Reaktionsmischung eine Zusammensetzung in Molverhältnis besitzt, welche in den folgenden Werteintervallen enthalten ist:

Mg/Si: 0-3
S/Si: 0-1
T/Si: 0-2
$F^-_{total}$: 0,1-6
$M^{m+}$/Si: 0-5
$H_2O$/Si: 10-70
Säure/Si: 0,1-6
HF/Si: 0-0,6,

wobei $F^-_{total}$ die Summe der $F^-$-Ionen darstellt.

9. Verfahren nach einem der Ansprüche 7 oder 8, worin im Schritt b) man die Reaktionsmischung bei einer Heiztemperatur von unterhalb 230°C hält, bis man eine kristalline Verbindung erhält.

10. Verfahren nach einem der Ansprüche 7 bis 9, worin im Schritt c) die Verbindung ausgetauscht und bei einer Temperatur oberhalb von 450°C unter trockenem Gas kalziniert wird.